# EUROPÄISCHE PATENTSCHRIFT

(11) **EP 1 218 217 B1**
(45) Veröffentlichungstag und Bekanntmachung des Hinweises auf die Patenterteilung: **04.01.2006**
(21) Anmeldenummer: 01971807.1
(22) Anmeldetag: 28.07.2001
(51) Int. Cl.: B60N 2/08

(54) **LÄNGSVERSTELLVORRICHTUNG FÜR KRAFTFAHRZEUGSITZE**
LONGITUDINAL ADJUSTMENT DEVICE FOR VEHICLE SEATS
DISPOSITIF DE REGLAGE LONGITUDINAL POUR SIEGE D'AUTOMOBILE

(30) Priorität: 16.08.2000 DE 10040594
(43) Veröffentlichungstag der Anmeldung: 03.07.2002
(73) Patentinhaber: KEIPER GmbH & Co. KG, 67657 Kaiserslautern (DE)
(72) Erfinder: SCHÜLER, Rolf, 42579 Heiligenhaus (DE); STEMMER, Jürgen, 42897 Remscheid (DE)
(74) Vertreter: Ludewig, Karlheinrich
(86) Internationale Anmeldenummer: PCT/EP2001/008773
(87) Internationale Veröffentlichungsnummer: WO 2002/014102

(56) Entgegenhaltungen:
- DE-A- 4 201 829
- FR-A- 2 356 043
- FR-A- 2 530 557
- US-A- 5 964 442
- PATENT ABSTRACTS OF JAPAN vol. 1998, no. 02, 30. Januar 1998 (1998-01-30) & JP 09 267671 A (TACHI S CO LTD), 14. Oktober 1997 (1997-10-14)
- PATENT ABSTRACTS OF JAPAN vol. 1999, no. 09, 30. Juli 1999 (1999-07-30) & JP 11 099857 A (TACHI S CO LTD), 13. April 1999 (1999-04-13)
- PATENT ABSTRACTS OF JAPAN vol. 1999, no. 11, 30. September 1999 (1999-09-30) & JP 11 151961 A (IKEDA BUSSAN CO LTD), 8. Juni 1999 (1999-06-08)

## Beschreibung

Die Erfindung bezieht sich auf eine Längsverstellvorrichtung an einem Kraftfahrzeugsitz der im Oberbegriff des Patentanspruches 1 genannten Art.

Aus der DE 198 27 068 C1 ist eine Längsverstellvorrichtung der eingangs genannten Art bekannt, bei der die mit den Holmen des Betätigungselementes zusammenwirkenden Enden der Entriegelungshebel an den jeweiligen Laufschienen gegenüber der Horizontalen geneigt verlaufen, und die Holme des Betatigungselements in den Lageraufnahmen an der Laufschiene außer schwenkbar, auch in axialer Richtung verschiebbar gelagert sind. Diese Anordnung ermöglicht zwar den Ausgleich der Elastizität der im Kraftfluss liegenden Bauteile bei einer Betätigung der Längsverstellvorrichtung durch eine Handhabe an der Rückenlehne bei Direktentsperrung der Sperrklauen auf einer Sitzlängsseite, so dass auch eine Entsperrung der Sperrklauen auf der anderen Sitzlängsseite möglich ist, jedoch erfolgt bei dem Gegenstand der DE 198 27 068 C1 kein Ausgleich des Überhubs aufgrund unterschiedlicher Toleranzen an den Sperrklauen.

Aufgrund fertigungsbedingter Toleranzen ist es nämlich möglich, dass zur Freigabe der Sperrklauen unterschiedliche Hebelwege an den Entriegelungshebeln der links- und rechtsseitigen Verriegelungseinrichtung eines Sitzes vorhanden sind. Das heißt: Werden über ein Betätigungselement mittels der Holme die Entriegelungshebel betätigt, so kann nach einem bestimmten Hubweg die erste Sperrklaue bereits gelöst sein und eine Verschiebung der Laufschiene auf der Führungsschiene ermöglichen, während die Sperrklaue der anderseitigen Verriegelungseinrichtung noch nicht gelöst ist. Um auch diese Sperrklaue vollständig aus ihrer Verriegelungslage zu lösen, wird ein weiterer Hubweg benötigt. Dieses ist mit der bekannten Längsverstellvorrichtung nicht möglich, da kein Überhub zur Verfügung gestellt werden kann.

Bei der aus der DE 198 27 065 A1 bekannten Längsverstellvorrichtung soll ein Elastizitätsausgleich des Betätigungselements dadurch erreicht werden, dass an einem Holm des Betätigungselements ein Federelement angeordnet ist, dessen eines Ende im Holm festgelegt ist, während dessen anderes Ende in Eingriff mit dem Hebelende eines Entriegelungshebels einer Verriegelungseinrichtung an einer Laufschiene des Sitzes steht.

Von Nachteil hierbei ist jedoch, dass ein gewisser Toleranzausgleich lediglich an einem Holm des Betätigungselements stattfindet. Wird jedoch gerade auf dieser Seite, an der sich das Federelement befindet, ein Überhub aufgrund von Toleranzen an der Sperrklaue des Verriegelungselements benötigt, so lässt sich das Betätigungselement nicht bis zur vollständigen Entriegelung betätigen, da das Verriegelungselement an der anderen Seite des Sitzes sich möglicherweise bereits in seiner Endstellung befindet.

Die FR 2 530 557 beschreibt eine Längsverstellvorrichtung, bei der zwei Schwenkhebel durch ein mit einem Betätigungselement verbundenes Koppelglied gemeinsam verschwenkbar sind. Die Hebelarme sowie das Koppelglied sind hierbei so ausgebildet, dass eine Ausgleichsbewegung zwischen dem Koppelglied und den Hebelarmen in Querrichtung der Schienenpaare möglich ist. Die Schwenkachse des einen Schwenkhebels ist dabei mit einer Rückstellfeder verbunden, deren einer verlängerter Federschenkel mit dem Koppelglied verbunden ist.

Nachteilig an diesem Aufbau ist es, dass Abweichungen auf der Seite, auf der sich die Feder befindet, nicht so gut ausgeglichen werden können, wie auf der anderen Seite. Außerdem besteht die Gefahr, dass der stark verlängerte Federschenkel sich bei stärkeren Abweichungen vom Kopplungsglied löst und dadurch die gesamte Vorrichtung unbrauchbar wird.

Aufgabe der vorliegenden Erfindung ist es daher, eine Längsverstellvorrichtung der eingangs genannten Art dahingehend zu verbessern, dass ein genügender Ausgleich von Toleranzen an den Sperrklauen mit einem genügenden Ausgleich des daraus resultierenden Überhubs gewährleistet ist und eine sichere und vollständige Entriegelung der Verriegelungseinrichtung an beiden Schienen des Sitzes ermöglicht wird.

Diese Aufgabe wird mit den in Patentanspruch 1 genannten Merkmalen gelöst. Demnach ist in den Übertragungsweg der Stellbewegung vom Betätigungselement auf die Holme, welche den Entriegelungshebel der schienenseitigen Verriegelungseinrichtung betätigen, ein Mittel zur Entkopplung der Holme voneinander vorgesehen. Durch diese Maßnahme kann es erreicht werden, dass ein Holm, dessen Stellweg zur vollständigen Entriegelung der Verriegelungseinrichtung toleranzbedingt länger ist als der Stellweg des anderen Holmes, über das Betätigungselement noch weiter betätigt werden kann, auch wenn der Holm mit dem kürzeren Stellweg durch Erreichen der Endlage der Verriegelungseinrichtung bereits nicht mehr bewegt werden kann.

Weiterhin umfasst das Mittel zur Entkopplung der Holme voneinander einen Hebel, der eine zentral an diesem angeordneten Schwenkachse aufweist, in der ein Ende des Betätigungselementes gelagert ist. Der schwenkbar an dem Ende des Betätigungselementes gelagerte Hebel weist zwei Hebelarme auf, die von der zentral angeordneten Schwenkachse abgehen. Die radial außenliegenden Hebelenden der Hebelarme sind in Betätigungsverbindung mit den Holmen. Werden die Holme über den Betätigungshebel mittels des Ausgleichshebels betätigt, so werden zunächst beide Holme gleichmäßig nach unten betätigt. Gelangt ein erster Holm in seine Endposition, so kann der zweite Holm weiterbewegt werden, da der Ausgleichshebel um die Schwenkachse am Betätigungshebel verkippt, und derart eine Weiterbetätigung des zweiten Holmes und die vollständige Entriegelung der ihm zugeordneten Verriegelungseinrichtung ermöglicht.

Außerdem sind die Holme verschwenkbar und verschieblich auf einem Querrohr angeordnet, da derart eine Verkürzung der Distanz zwischen den beiden Holmen ermöglicht wird, wenn der Ausgleichshebel verkippt. Eine Verkantung der Holme auf der Querstange ist durch diese verschwenkbare und verschiebliche Anordnung vermieden. Durch die erfindungsgemäße Maßnahme wird es also erreicht, dass beide Verriegelungseinrichtungen eines Sitzes über die entkoppelten Holme vollständig aus ihrer Verriegelungsstellung in eine Freigabelage überführt werden können, in der der Sitz reibungsfrei längsverstellt werden kann.

Gemäß Anspruch 3 kann die Funktionstüchtigkeit der Holme auch noch dadurch verbessert werden, dass diese auf dem Querrohr an Lagerrohren angeordnet sind, wodurch die Holme kippfrei an dem Querrohr gelagert sind.

In einer weiteren vorteilhaften Ausführungsform der Erfindung gemäß Anspruch 4 werden an den dem Betätigungselement zugewandten Enden der Lagerrohre jeweils ein weiterer Holm angeordnet, dessen Ende die Durchbrüche in dem Hebelende des jeweiligen Hebelarmes des Ausgleichshebels durchsetzt und derart mit dem Ausgleichshebel in Wirkverbindung steht. Durch diese Maßnahme kann die Länge des Ausgleichshebels verkürzt werden, der somit eine höhere Steifigkeit aufweist.

Weitere Maßnahmen und Vorteile der Erfindung ergeben sich aus den Unteransprüchen, der nachfolgenden Beschreibung und den Zeichnungen. In den Zeichnungen ist die Erfindung in drei Ausführungsbeispielen dargestellt. Es zeigen:
- Fig. 1: eine erfindungsgemäße Längsverstellvorrichtung an zwei schematisch angedeuteten Laufschienen-/Führungsschienen-Paaren,
- Fig. 2: einen Ausschnitt der in Fig. 1 dargestellten Ausführungsform der Erfindung, an der jedoch zusätzlich als Variante zu der Ausführungsform von Fig. 1 eine easy-entry-Einrichtung an der linken Sitzschiene angreift,
- Fig. 3a: die erfindungsgemäße Längsverstellvorrichtung in einer Ansicht von hinten auf den Ausgleichshebel und die Holmenden schauend, wobei der Betätigungshebel nicht betätigt ist,
- Fig. 3b: eine Darstellung gemäß Fig. 3a, wobei der Betätigungshebel um einen ersten Betätigungsweg verstellt worden ist,
- Fig. 3c: eine Darstellung gemäß Fig. 3a und 3b, wobei der Betätigungshebel um einen weiteren Betätigungsweg verstellt worden ist,
- Fig. 4: eine, an die erste Ausführungsform angelehnte zweite Ausführungsform der erfindungsgemäßen Längsverstellvorrichtung, schematisch in Ansicht von oben.

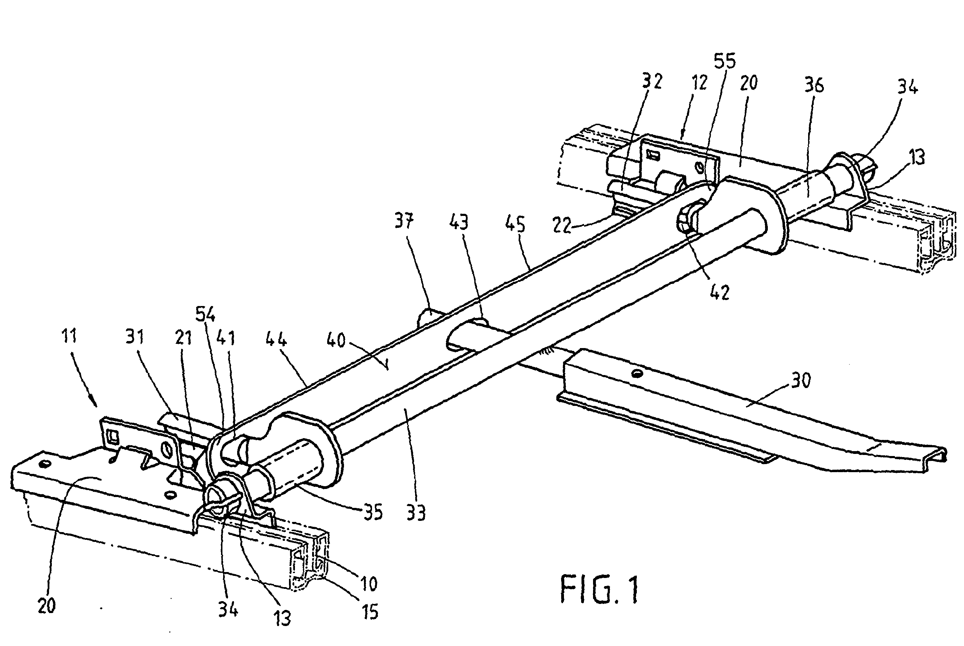

In den Fig. 1 bis 3c ist die Erfindung in einem ersten Ausführungsbeispiel dargestellt. Nicht dargestellt ist in sämtlichen Figuren, der mit einer Rücklenlehne über einen bekannten Stellbeschlag verbundene Sitzteil, der mit seinem Untergestell auf seinen beiden Sitzlängsseiten mit den in den Figuren dargestellten Laufschienen 10 einer auf beiden Sitzlängsseiten vorgesehenen Schienenanordnung fest verbunden sein kann. Jede Schienenanordnung umfasst neben der Laufschiene 10 eine am Fahrzeugboden festgelegte Führungsschiene 15, in der die Laufschiene nach Entriegelung einer Verriegelungseinrichtung 11, 12 längsverschieblich ist. Die Verriegelungseinrichtung 11, 12 ist über Betätigungsbauteile in ihre Freigabelage zu überführen. Zu diesen Betätigungsbauteilen gehört insbesondere ein mit einem Querrohr 33 an den Laufschienen 10 gelagerter und mit dem Querrohr 33 fest verbundener Betätigungshebel 30, dessen eines Ende 37 in dem vorliegenden Ausführungsbeispiel einen Axialdurchbruch 43 eines Hebels 40 durchsetzt. Das Querrohr 33 ist in den Lageraufnahmen 34 an den Lagerböcken 13 drehbar gelagert. Die Lagerböcke 13 sind dabei Bestandteil eines Bauteils / einer Platte 20, die jeweils mit der Laufschiene 10 verbunden ist. Die Platte 20 ist Teil der Verriegelungseinrichtung 11, 12, die in dem vorliegenden Ausführungsbeispiel im Schieneninneren der Laufschiene 10 geeignete Mittel umfasst, um in einer Verriegelungslage die Laufschiene 10 gegenüber der Führungsschiene 15 zu verriegeln und in einer Freigabelage eine Bewegung der Laufschiene 10 gegenüber der Führungsschiene 15 zu ermöglichen. Zur Überführung in die Freigabelage weist die Verriegelungseinrichtung 11, 12 einen Entriegelungshebel 21, 22 auf, der mittels an der Querstange 33 angeordneter Holme 31, 32 über den Betätigungshebel 30 betätigt werden kann. Die Holme 31, 32 sind axial verschieblich und verschwenkbar am Querrohr 33 gelagert und sind dabei fest mit Lagerrohren 35 und 36 verbunden, die ein Verkippen und Verkanten der Holme 31, 32 an ihren Lagerstellen auf dem Querrohr 33 verhindern.

Die entgegengesetzten Enden der Holme 31, 32 übergreifen jeweils die Hebelenden 23 und 24 der Entriegelungshebel 21, 22.

Der bereits erwähnte Hebel 40 verfügt über zwei Hebelarme 44 und 45, die sich in der Ruhelage des Hebels 40 ungefähr parallel zum Querrohr 33 erstrecken, jedoch räumlich ein wenig zu diesem versetzt sind. In den Hebelenden 54 und 55 der Hebelarme 44 und 45 sind Durchbrüche 41, 42 in dem Hebel 40 vorgesehen. Diese Durchbrüche 41, 42 sind als Langlöcher ausgeführt, werden von den Holmen 31 und 32 durchsetzt und dienen auch als Schwenklager des Hebels 40 auf den Holmen 31 und 32.

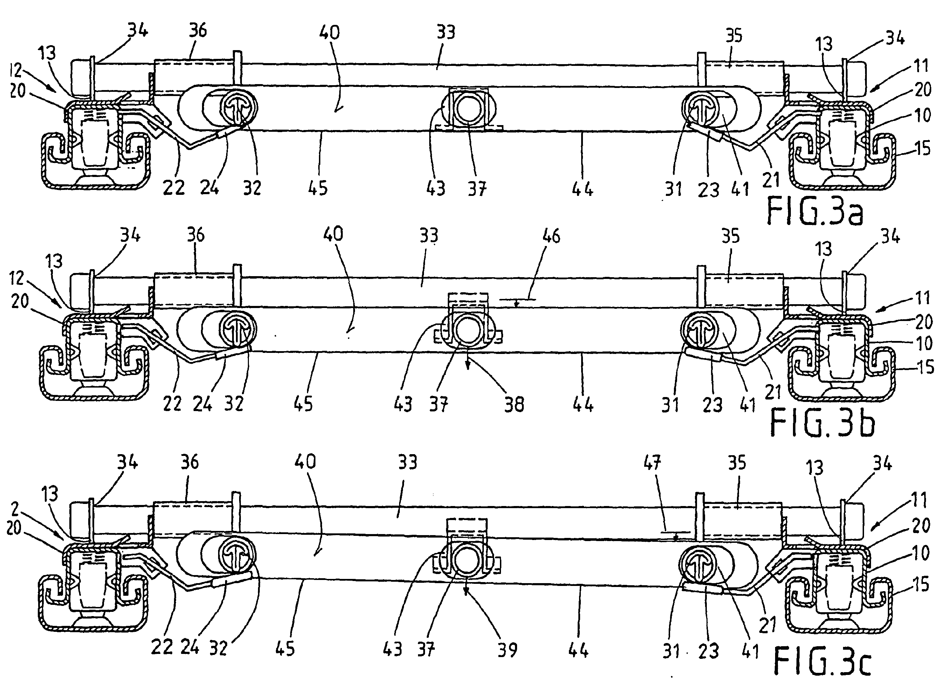

Die Wirkungsweise der erfindungsgemäßen Verriegelungseinrichtung soll nun anhand der Fig. 3a bis 3c erläutert werden. In der Fig. 3a ist eine erfindungsgemäße Längsverstellvorrichtung dargestellt, bei der sich die Verriegelungseinrichtungen 11 und 12 in ihrer Verriegelungslage befinden. Vom Betätigungshebel 30 wird kein Stellmoment auf den Hebel 40 ausgeübt. Die Holme 31 und 32 liegen aber an den Hebelenden 23 und 24 der Entriegelungshebel 21 und 22 an.

In Fig. 3b wird nun von einem Benutzer des Fahrzeugsitzes, der diesen längsverstellen möchte, der Betätigungshebel 30 betätigt, so dass sich das Ende 37 des Betätigungshebels in Betätigungsrichtung 38 nach unten bewegt. Das Ende 37 des Betätigungshebels drückt damit den Hebel 40 um den Stellweg 46 nach unten. Der Hebel 40 nimmt über seine Hebelarme 44 und 45 die in deren Durchbrüchen 41 und 42 gelagerten Holme 31 und 32 mit nach unten, die ihrerseits die Entriegelungshebel 21 und 22 betätigen. In der Endstellung gemäß Fig. 3b wird nun angenommen, dass der Holm 32 den Entriegelungshebel 22 bereits in seine Endlage betätigt hat, in der die Verriegelungseinrichtung 12 vollständig in ihre Freigabelage überführt ist. Der Entriegelungshebel 21 an der Verriegelungseinrichtung 11 ist jedoch toleranzbedingt noch nicht vollständig in seine Freigabelage überführt worden. Ein weiterer Betätigungsweg ist nunmehr notwendig, um auch die zweite Verriegelungseinrichtung vollständig in ihrer Freigabelage zu überführen. In Fig. 3c ist nun dargestellt, wie der Betätigungshebel 30 weiter verstellt wird und das Ende 37 des Betätigungshebels 30 weiter in einer Betätigungsrichtung 39 bewegt wird. Das Hebelende 55 des Hebelarms 45 wird dabei nicht weiter abgesenkt, sondern nur das Lager aus Durchbruch 42 und Holm 32 verschwenkt. Eine Verschwenkung findet ebenfalls im Lager zwischen dem Axialdurchbruch 43 und dem Ende 37 des Betätigungshebels 30 statt. Abgesenkt wird aufgrund dieser Verschwenkung das Hebelende 54 des Hebelarmes 44 um den Stellweg 47. Hierdurch wird der Holm 31 und der Entriegelungshebel 21 weiter nach unten bewegt, so dass die Verriegelungseinrichtung 11 vollständig betätigt und in ihre Freigabelage überführt wird. In der in Fig. 3c dargestellten Endstellung sind nunmehr beide Verriegelungseinrichtungen 11 und 12 an beiden Seiten des Sitzes in ihre Freigabelage überführt und eine Längsverstellung des Sitzes ist möglich.

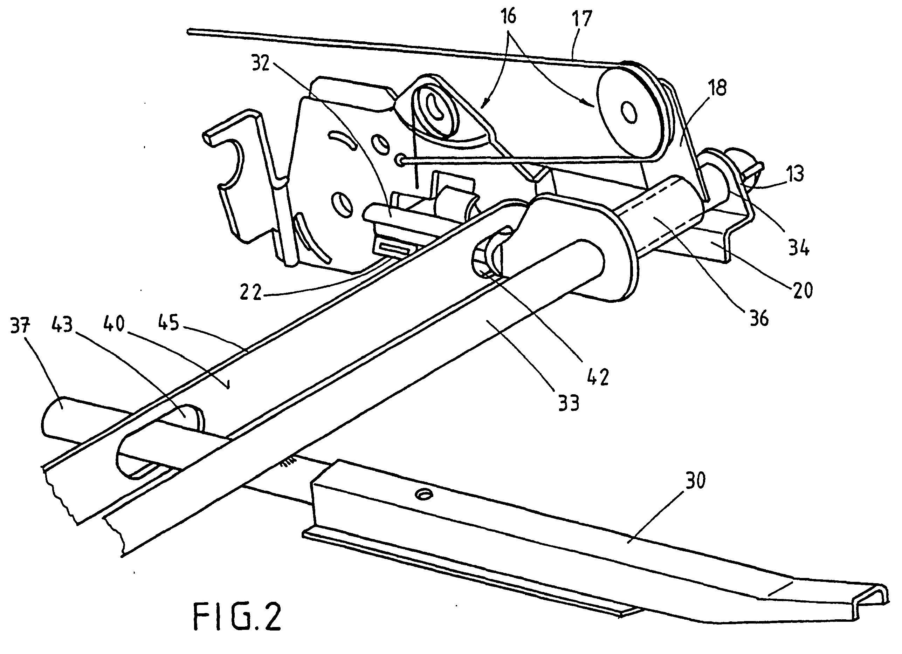

In Fig. 2 ist nun dargestellt, dass die erfindungsgemäße Längsverstellvorrichtung auch über eine easy-entry-Einrichtung 16 betätigt werden kann, die am Querrohr 33 angreift, welches fest verbunden ist mit dem Betätigungshebel 30. Die easy-entry-Einrichtung wird über einen Hebel an der Sitzrückenlehne betätigt (hier nicht graphisch dargestellt). Durch diese Betätigung wird über einen Seilzug 17 ein Hebelelement 18 betätigt, und somit über das Querrohr 33 auch das Hebelende 37 des Betätigungshebels 30 nach unten verschwenkt. Durch diese Flaschenzuganordnung wird die Kraft im Seilzug auf die Hälfte reduziert. Die weitere Funktionsweise ist identisch mit der bereits beschriebenen Funktion der erfindungsgemäßen Längsverstellvorrichtung.

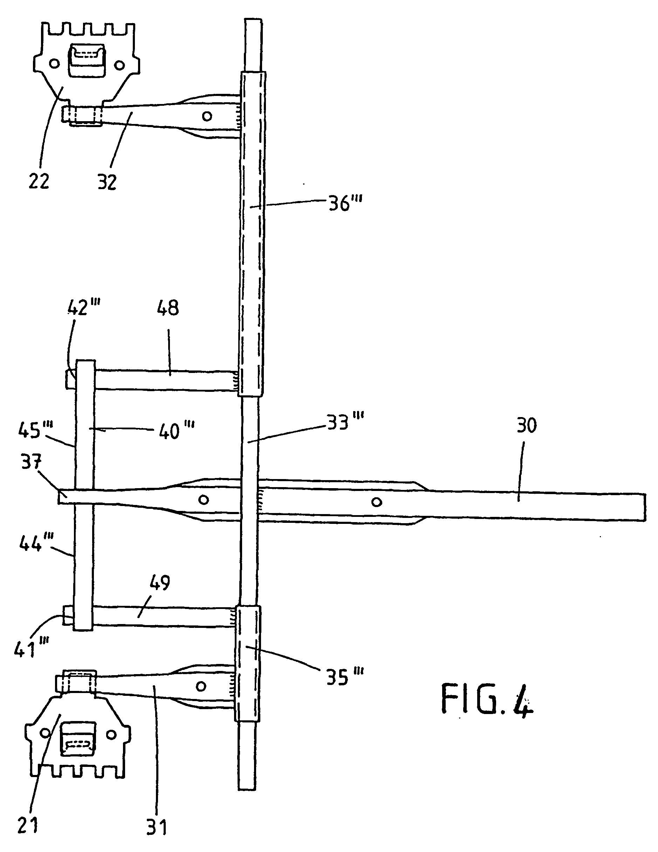

In Fig. 4 ist nun noch eine weitere Ausführungsform dargestellt, die im wesentlichen der ersten Ausführungsform der erfindungsgemäßen Längsverstellvorrichtung entspricht. Bei dieser Ausführungsform befindet sich jedoch auf einem Querrohr 33"', welches in bereits beschriebener Weise an der Laufschiene befestigt und gelagert ist, zwei verlängerte Lagerrohre 35"' und 36'". Diese Lagerrohre 35" und 36'" sind fest verbunden mit Holmen 31 und 32, die in Wirkverbindung mit den Entriegelungshebeln 21 und 22 stehen. An diesen Lagerrohren 35'" und 36'" sind jedoch zusätzlich noch an ihren dem Betätigungshebel 30 zugewandten Enden jeweils ein weiterer Holm 49 und 48 angeordnet. Diese Holme durchgreifen Durchbrüche 42'" und 41'" eines Hebels 40"', der in bereits aus dem ersten Ausführungsbeispiel vorbekannter Weise über den Betätigungshebel verstellt werden kann. Die Hebelarme 45"' und 44"' des Hebels 40"' sind im Vergleich zu dem ersten Ausführungsbeispiel verkürzt. Der Hebel 40"' weist daher eine höhere Steifigkeit auf und ist weniger geneigt, durch eine Überbetätigung des Benutzers eine Beschädigung zu erleiden.

Es bleibt nun noch darauf hinzuweisen, dass die dargestellten Ausführungsformen nur beispielhafte Verwirklichungen der Erfindung sind. Diese ist jedoch nicht darauf beschränkt. Es versteht sich, dass die dargestellten Komponenten der Erfindung in allen, dem Fachmann zugänglichen Materialen ausgeführt sein könnten.

### Bezugszeichenliste:

- 10: Laufschiene
- 11: Verriegelungseinrichtung
- 12: Verriegelungseinrichtung
- 13: Lagerböcke

- 15: Führungsschiene
- 16: easy-entry Einrichtung
- 17: Seilzug
- 18: Hebelelement

- 20: Platte/Bauteil
- 21: Entriegelungshebel
- 22: Entriegelungshebel
- 23: Hebelende
- 24: Hebelende

- 30: Betätigungshebel / Betätigungselement
- 31: Holm
- 32: Holm
- 33: Querrohr
- 33': Querrohr, 1. Abschnitt / Abgang
- 33": Querrohr, 2. Abschnitt /Abgang
- 33'": Querrohr
- 34: Lageraufnahme (des Querrohrs an der Platte 38)
- 35: Lagerrohr
- 35'": Lagerrohr
- 36: Lagerrohr
- 36"': Lagerrohr
- 37: Ende von 30
- 38: Betätigungsrichtung
- 39: Betätigungsrichtung
- 40: Hebelelement / Ausgleichshebel
- 40'": Hebelelement / Ausgleichshebel
- 41: Durchbruch / Langloch
- 41'": Durchbruch / Langloch
- 42: Durchbruch / Langloch
- 42'": Durchbruch / Langloch
- 43: Axial-Durchbruch / Schwenkachse
- 44: Hebelarm
- 44'": Hebelarm
- 45: Hebelarm
- 45'": Hebelarm
- 46: Stellweg
- 47: Stellweg
- 48: Stellholm / Holm
- 49: Stellholm / Holm

- 54: Hebelende von 44
- 55: Hebelende von 45
- 56: Steg

## Patentansprüche

1. Längsverstellvorrichtung für Kraftfahrzeugsitze, bei der der Sitz auf jeder Sitzlängsseite an in fahrzeugfesten Führungsschienen (15) verschiebbar angeordneten Laufschienen (10) befestigt ist,
und jede Laufschiene eine aus der Verbindung mit der Führungsschiene lösbare Verriegelungseinrichtung (11, 12) aufweist, die an jeder Laufschiene einen schwenkbar abgestützten Entriegelungshebel (21, 22) zur Uberführung in eine Freigabelage umfasst, der über Holme (31, 32) eines, an den Laufschienen gelagerten Betätigungselements (30) zu verstellen ist,
**dadurch gekennzeichnet,**
**dass** die Übertragung eines auf das Betätigungselement (30) ausgeübten Stellmoments auf die Holme (31, 32) über ein Ausgleichsgetriebe unter Entkopplung der Holme (31, 32) voneinander erfolgt,
**dass** das Ausgleichsgetriebe einen Ausgleichshebel (40, 40"') umfasst, bei dem von einer vorzugsweise zentral angeordneten Schwenkachse (43) ausgehend zwei Hebelarme (44, 44"', 45, 45'") abgehen, deren radial außenliegende Hebelenden (54, 55) in Betätigungsverbindung mit den Holmen (31, 32) stehen, und wobei das Stellmoment von dem Betätigungselement (30) an der Schwenkachse (43) auf den Ausgleichshebel (40, 40'") übertragbar ist,
**dass** die beiden Holme (31, 32) verschwenkbar und verschieblich auf einem Querrohr (33, 33'") angeordnet sind, welches an Lageraufnahmen (34) schwenkbar abgestützt ist, die durch Bohrungen in an den Laufschienen (10) festgelegten Lagerböcken (13) gebildet sind.

2. Längsverstellvorrichtung nach Anspruch 1, **dadurch gekennzeichnet, dass** an den Hebelenden (23, 24) Langlöcher (41, 41 "'; 42, 42'") vorgesehen sind, durch die die Enden der Holme (31, 32) hindurchgeführt sind.

3. Längsverstellvorrichtung nach einem der Ansprüche 1 oder 2, **dadurch gekennzeichnet, dass** die Holme (31, 32) an Lagerrohren (35, 35"', 36, 36'") auf dem Querrohr (33, 33"') angeordnet sind, und mit diesen Lagerrohren (35, 35'", 36, 36'") fest verbunden sind.

4. Längsverstellvorrichtung nach Anspruch 3, **dadurch gekennzeichnet, dass** an den dem Betätigungselement zugewandten Enden der Lagerrohre (35"', 36"') jeweils ein weiterer Holm (48, 49) vorgesehen ist, der mit den Hebelenden (54, 55) der Hebelarme (44"', 45"') des Ausgleichshebels (40, 40"') in Wirkverbindung steht.

5. Längsverstellvorrichtung nach Anspruch 1, **dadurch gekennzeichnet, dass** am Querrohr (33) ein Hebelelement (18) einer "easy-entry" Einrichtung (16) angeordnet ist, welches über einen Seilzug (17) betätigbar ist, der mit einem an der Sitzrückenlehne angebrachten Auslösehebel in Wirkverbindung steht.

## Claims

1. A longitudinal adjustment device for vehicle seats, with which the seat, on any long side of the seat, is fixed on slide rails (10), which are arranged such that they can be displaced on guide rails (15) fixed in the vehicle,
and each slide rail has a latching device (11, 12) that can be separated from the connection with the guide rail, and which on each slide rail comprises a supported, swivelling unlatching lever (21, 22) for the selection of a release position, which is operated via the links (31, 32) of an actuating element (30) attached to the slide rails,
**characterised in that**,
the transfer of a controlling torque exerted on the actuating element (30) to the links (31, 32) takes place via a differential gear, with decoupling of the links (31, 32) from each other,
that the differential gear comprises a compensating lever (40,40'''), on which from a preferably centrally arranged pivot axis (43), two lever arms (44, 44"', 45, 45"') extend, whose radial outerlying lever ends (54, 55) are in actuating connection with the links (31, 32), and whereby the controlling torque of the actuating element (30) can be transferred on the pivot axis (43) to the compensating lever (40, 40"'),
that the two links (31, 32) are arranged so that they can pivot and slide on a transverse tube (33, 33"'), which is supported such that it can rotate on bearing mountings (34), which take the form of holes in bearing blocks (13) fixed on the slide rails (10).

2. The longitudinal adjustment device in accordance with Claim 1, **characterised in that** on the ends of the levers (23, 24) elongated holes (41, 41"'; 42, 42"') are provided, through which the ends of the links (31, 32) are passed.

3. The longitudinal adjustment device in accordance with Claim 1 or 2, **characterised in that** the links (31, 32) are arranged on bearing tubes (35, 35"'; 36, 36"') on the transverse tube (33, 33"') and are rigidly connected to these bearing tubes (35, 35"'; 36, 36"').

4. The longitudinal adjustment device in accordance with Claim 3, **characterised in that** on the end of each of the bearing tubes (35"', 36"') facing the actuating element a respective further link (48, 49) is provided, which is in operating connection with the respective end of the lever (54, 55) of the lever arms (44"', 45"') of the compensating lever (40, 40"').

5. The longitudinal adjustment device in accordance with Claim 1, **characterised in that** a lever element (18) of an 'easy-entry' device (16) is arranged on the transverse tube (33), which can be actuated by means of a Bowden cable (17) and which is in operating connection with an operating lever mounted on the seat back.

## Revendications

1. Dispositif de réglage longitudinal pour sièges d'automobile, pour lequel le siège est fixé sur chaque côté longitudinal de siège sur des glissières de déplacement (10), disposées de façon déplaçable dans des glissières de guidage (15) fixées aux véhicules,
et chaque glissière de déplacement présentant un dispositif de verrouillage (11, 12), désolidarisable de la liaison avec la glissière de guidage et comprenant, sur chaque glissière de déplacement, un levier de déverrouillage (21, 22), soutenu à pivotement, pour le passage en une position de libération et devant être manoeuvré par des montants (31, 32) d'un élément d'actionnement (30) monté sur les glissières de déplacement,
**caractérisé en ce que**
la transmission d'un couple de réglage, exercée sur l'élément d'actionnement (30) aux montants (31, 32) s'effectue par l'intermédiaire d'une transmission d'équilibrage avec désaccouplement mutuel des montants (31, 32),
**en ce que** la transmission d'équilibrage comprend un levier d'équilibrage (40, 40"') pour lequel, depuis un axe de pivotement (43), de préférence disposé centralement, partent deux bras de levier (44, 44"', 45, 45"'), dont les extrémités de levier (54, 55) radialement extérieures sont en liaison d'actionnement avec les montants (31, 32), et le couple de réglage étant transmissible du levier d'actionnement (30) à l'axe de pivotement (43) sur le levier d'équilibrage (40, 40"'),
**en ce que** les deux montants (31, 32) sont disposés à pivotement et de façon déplaçable sur un tube transversal (33, 33"'), soutenu à pivotement sur des logements de palier (34) formés par des perçages ménagés dans des blocs-palier (13) fixés sur les glissières de déplacement (10).

2. Dispositif de réglage longitudinal selon la revendication 1, **caractérisé en ce que**, sur les extrémités de levier (23, 24) sont prévus des trous oblongs (41, 41"' ; 42, 42"'), à travers lesquels sont passées les extrémités des montants (31, 32).

3. Dispositif de réglage longitudinal selon l'une des revendications 1 ou 2, **caractérisé en ce que** les montants (31, 32) sont disposés sur des tubes de palier (35, 35"', 36, 36"') eux-mêmes sur le tube transversal (33, 33"') et sont reliés rigidement à ces tubes de palier (35, 35"', 36, 36'").

4. Dispositif de réglage longitudinal selon la revendication 3, **caractérisé en ce que**, sur chacune des extrémités, tournées vers l'élément d'actionnement, des tubes de palier (35"', 36"') est prévu un autre montant (48, 49), relié fonctionnellement aux extrémités de levier (54, 55) des bras de levier (44"', 45"') du levier d'équilibrage (40, 40"').

5. Dispositif de réglage longitudinal selon la revendication 1, **caractérisé en ce que**, sur le tube transversal (33) est disposé un élément formant levier (18) d'un dispositif de type "easy-entry" (16), actionné par l'intermédiaire d'un câble de traction (17), relié fonctionnellement à un levier de déclenchement monté sur le dossier de siège.
